# EUROPEAN PATENT SPECIFICATION

(11) **EP 4 291 700 B1**
(45) Date of publication and mention of the grant of the patent: **10.06.2026**
(21) Application number: 21712272.0
(22) Date of filing: 10.02.2021
(51) Int. Cl.: D01D 5/34, D01F 8/06, D01F 8/12, D01F 8/14, D01F 1/10, D01F 1/04, D01F 6/60

(54) **LOW GLOBAL WARMING POTENTIAL FIBER AND ITS MANUFACTURING PROCESS**
FASER MIT GERINGEM POTENZIAL FÜR DIE GLOBALE ERWÄRMUNG UND IHREN HERSTELLUNGSPROZESS
FIBRE À FAIBLE POTENTIEL D'AFFECTER LE RÉCHAUFFEMENT GLOBAL FAIBLE ET SON PROCESSUS DE FABRICATION

(43) Date of publication of application: 20.12.2023
(73) Proprietor: AquafilSLO d.o.o., 1000 Ljubljana (SI)
(72) Inventor: JAHIC, Denis, 1211 Ljubljana Smartno (SI); KNEZEVIC, Svetlana, 1000 Ljubljana (SI)
(74) Representative: Jersan, Tatjana
(86) International application number: PCT/SI2021/050004
(87) International publication number: WO 2022/173379

(56) References cited:
- KR-A- 20160 148 244
- US-A- 5 885 705
- US-A1- 2017 002 117
- US-B1- 7 887 726

## Description

### Technical field

The invention refers to a novel man-made multicomponent filament of the polymer fiber with a significantly reduced Global Warming Potential (GWP) value and to its manufacturing process. The expression "man-made" in the context of this application is referring to all synthetic filaments/fibers with the exclusion of all natural filaments/fibers. The man-made multicomponent filament of the polymer fiber of the invention is produced from standard spinnable thermoplastic materials, polyamide 6 or polyamide 66, as main fiber constituents, i.e. main carrier polymer and may contain various colorants, additives, fillers, reinforcing materials, polymer modifiers, etc., depending on the application.

The structure of the filament of the polymer fiber **is** a core sheath structure, meaning that the filament is comprised of at least one core component and of at least one sheath component. The filament of the fiber consists of two types of polyamide 6. The sheath component, which defines the filament appearance and functional characteristics related to the filament surface, is produced from the standard spinning grade resin, polymerized either from virgin, or virgin-equivalent chemically regenerated monomer. The core component is produced from mechanically regenerated polyamide 6 waste material, which contributes to the low GWP value of the filament and consequently to the low GWP value of the overall fiber comprising said filament(s). The waste material used in the core component originates from post-industrial waste and/or post-consumer polyamide 6 waste from textile, flooring and industrial applications, and is in various physical forms, i.e. multifilament waste, monofilament waste, fluff waste, fishnet waste, rope waste, engineering plastic waste, textile waste, free-falls waste. Since the core component is produced from mechanically regenerated waste material, the GWP value of the core component is at least 30% lower than the GWP value of the sheath component. Consequently the GWP value of the core component is at least 30 % lower than the GWP value of presently used core components in the filament production of core sheath structure. The low GWP value of the core component thus contributes to the low GWP value of the overall fiber comprising said filament(s).

The filament of the invention is used for production of polymer fibers, which are intended for use in apparel, flooring, air bag, parachute, tires, transport belts, medical, and other technical applications.

### Background

In the context of Green deal ambitious plan, which foresees as key 2030 targets at least 40% cuts in greenhouse gas (GHG) emissions (from 1990 levels) and by 2050 to become climate neutral, it is crucial to find adequate new technologies, products and business models, which will enable achieving such targets and transition towards zero carbon society.

One of the possible technologies that enable product's reduced carbon footprint is environmentally sound recycling process of plastic waste. There are several kinds of technologies available, with its own advantages and also limitations:
a) mechanical recycling process of plastic waste, which is fairly simple recycling process, with low energy consumption and therefore also potentially very low GHG emissions. On the other hand, such recyclates do not offer a wide range of possible uses in the products as their quality might be degraded and also contaminated with substances and its degradation products, which were added in the previous life cycle of the product. A mitigation to that is possible, if the input of the waste material and it's composition into the recycling process is well defined and fairly clean waste sources are used. Consequently, only specific waste stream are appropriate to be used in such processes;
b) chemical recycling process of plastic waste, which is usually more complex recycling process, with relatively higher energy demand if compared to mechanical recycling. Recyclates, that are output to depolymerisation process as one of the chemical recycling options, can be efficiently cleaned from all the contaminants and additives and used back in lieu of any primary raw material and enter into any usual respective production chain. Unfortunately, such chemical recycling - depolymerisation is not feasible for all polymers: for example polyamide 66 (which is usable in a functionally equivalent way to polyamide 6), some polyesters and polyurethane do not offer the opportunity for a rational depolymerization process.

As a response to Green deal initiative on one hand and on the other hand specific limitations related to mechanical recycling and chemical (depolymerisation) recycling process, Aquafil is introducing a range of novel man-made multi component filaments of the polymer fiber with a significantly reduced Global Warming Potential. Fibers are composed of the core component, produced from mechanically regenerated waste and can be used in apparel, flooring, air bag, and many other technical applications.....

The awareness on the importance of environmentally sustainable practices has been increasing steadily. Along with the worldwide recognition of the global warming phenomenon, as well as of the critical importance of minimization of environmental impacts, there has been a significant development of relevant technologies and know how, that are making these targets measurable and achievable. The environmental burden of any given product can be estimated according to the strictly defined rules and its Global Warming Potential value can be exactly calculated.

Global warming potential (GWP) value is a measure used to describe the relative potency of a greenhouse gas, taking account of how long it remains active in the atmosphere. The global-warming potential values (GWPs, in kg CO₂/kg ) currently used are those calculated over a period of 100 years, with carbon dioxide taken as the gas of reference with a 100-year GWP, against which all other greenhouse gases are evaluated. Along with the GWP, the Global energy requirement - Primary energy demand (GER-PED, in MJ/kg) is used as a measure of the total amount of primary energy extracted from the earth and included as an indicator of overall energy demand of the product. While there is a strong interest on the market to minimize the ecological footprint of the production and to deal with the recycled and/or recyclable products, the quality demand, i.e. criticality level imposed to the product quality in the industry of man-made fibers remains high. Due to the nature of the continuous man-made fiber production process, where typically a 20 micron thick multifilament fiber is melt spun at the speeds of 200-300 km/h, the process efficiency and the specific properties of the final product depend strongly on the purity and homogeneity of the raw materials. Moreover, typical consumer applications of man-made fibers are related to either skin contact of the fabric in a garment (apparel, workwear, protective wear etc.), or the presence of big surfaces produced of fibers in living and working environment, typically upholstery (curtains, carpets etc.) or automotive industry (air bags, car seat covers, tyres, etc....).

Nowadays the safety of these products is routinely evaluated through the testing and certification, e.g. Oekotex, SVHC, TUV, etc.... standard system. The waste is by its nature a non-controlled raw material and cannot as such be regarded as an appropriate and safe raw material for above mentioned man-made fiber applications.

Polyamide 6 (polycaproamide) fibers are generally characterized by excellent mechanical properties, durability, dimensional stability and fastness, due to which they are widely used for interiors, clothing, vehicle, industrial uses etc. The Environmental burden of the polyamide 6 fiber, produced from the standard raw materials in the conventional spinning process has been estimated following general rules of the EPD (Environmental Product Declaration) international program and PCR 263&264 (Textile yarn and thread of natural fibers, manmade filaments or staple fibers). The calculations based on the application of Life Cycle Assessment (LCA) methodology have demonstrated, that the chemical regeneration by depolymerization of the pre- and post-consumer waste and the incorporation of regenerated raw material, have contributed to more than 4-fold decrease of the Fiber GWP (Life Cycle Assessment of ECONYL ^{®} and virgin PA6 polymer NTF ECONYL ^{®} yarn for EPD certification, REV.1, 02.08.2019).

These results can be further improved by the ongoing activities for improvement of the process efficiency only in a limited extent. For any further significant GWP reduction, the use of new technologies and implementation of nonstandard approach is compulsory for providing cost-effective solutions. While there is a strong interest on the market to minimize the footprint of the production and to deal with the recycled and/or recyclable products, the quality demand, i.e. criticality level imposed to the raw material quality in the industry of man-made fibers remains high. Due to the nature of the continuous multifilament production process and the specific properties of the final product, it is not possible to meet these criteria by using the recycled raw materials to manufacture textile multifilament fibers by the conventional spinning. The solution to this is providing a core-sheath composite fiber with minimized GWP value, which would further reduce fiber impact to the final GWP of the garment, while keeping the fiber mechanical and visual properties **up** to the existing standards in the trade.

Filaments are usually produced by spinning technology, wherein, in multicomponent spinning, at least two different materials are molten and conveyed separately to the spinneret orifice, from which they are spun one alongside another to form a single filament. The technology of multicomponent (or composite) spinning is often used to impart various functionalities to filaments, and consequently to fibers, by the presence of the functional material or additive as one filament component, while keeping the critical production and/or processing characteristics of the filament inside the standard range by the presence of another component. The composite filaments have found vast applications, for instance in electronics, optics, spunbond nonwovens, self-healing composites, flooring products, medicine etc., by using various components with complementary properties and incorporating various fillers. Different configurations and shapes of filaments are possible, for example bicomponent filaments, broadly defined as the core/sheath, side-by-side and the sea/islands configuration. The core/sheath (C/S, or core/shell) configuration is the type of the composite filament where the polymer used in the core is completely surrounded by another component used in the sheath. For example, by multicomponent spinning an additional, third component may be added to the composite filament which would provide the additional particularly requested functionality to the fiber, for example antistatic property, hydrophilicity, hydrophobicity, enablement of low melt applications, etc. In this cases the structure of the filament would be of a core-sheath-sheath, but also other fiber cross section configurations are possible, by combining the core-sheath and the side-by-side.

Current recycling practices can be generally classified as mechanical recycling, often also referred to as mechanical downgrading, i.e. without any chemical treatment. The procedures of mechanical downgrading are, but not limited to, shredding, grinding, washing, friction washing, extruding, pelletizing, injection moulding. The waste polymer products and semi-products, mechanically recycled from most part of the industrial and consumer applications of polymer products and semi-products, can generally be reused in less demanding engineering applications, however they are as such not suitable to be used in high-speed melt spinning of textile fibers. Most often the waste material would contain colorants, pigments, fillers, processing aids and other additives, which in the spinning process would detrimentally affect the process efficiency. Only in very limited number of cases the waste can be used as a raw material and processed in the conventional monocomponent fiber production. This applies to e.g. reextruded PET bottles, as an extremely pure waste type. Mostly this way of processing is characterized by low efficiency, making it an economically unjustified approach.

The relevant prior art can example be found in documents US 5885705 and US 2017/002117.

The aforementioned drawbacks are solved by the process defined by independent claim 1, a manufacturing process of a man-made multicomponent filament of the polymer fiber comprising at least one core component comprised of waste material, wherein the waste material is pretreated in order to be suitable for the use in the spinning technology, and at least one sheath component comprised of the virgin or the virgin-equivalent chemically regenerated polymer material. The role of the sheath component is to protect, hide and enclose the core component, and to contribute to the physicochemical properties in the production and processing of the filament and consequently of the polymer fiber comprising said filament(s). The use of the virgin or the virgin-equivalent chemically regenerated polymer material as a sheath component keeps the filament, and consequently the polymer fiber comprising said filament(s), mechanical and visual properties **up** to the existing standards in the trade. The use of the waste material as the core component minimizes GWP value and further reduces the final GWP of the fabric made of the fibers comprising said filament(s).

The first aspect of the invention is thus a multicomponent filament of the polymer fiber with low GWP value.

The second aspect of the invention is a polymer fiber comprising said filament(s). The polymer fiber may be a monofilament fiber, wherein the single filament is a filament of the invention. The polymer fiber may be a multifilament fiber, wherein at least one of the individual filaments of the multifilament polymer fiber is a filament of the invention.

The third aspect of the invention is a manufacturing process of a filament of the invention and consequently of the polymer fiber comprising said filament(s).

The fourth aspect of the invention is a woven or a knitted fabric made of polymer fibers comprising filament(s).

### Summary of the invention

The invention will be described in detail hereinafter and presented in figures.

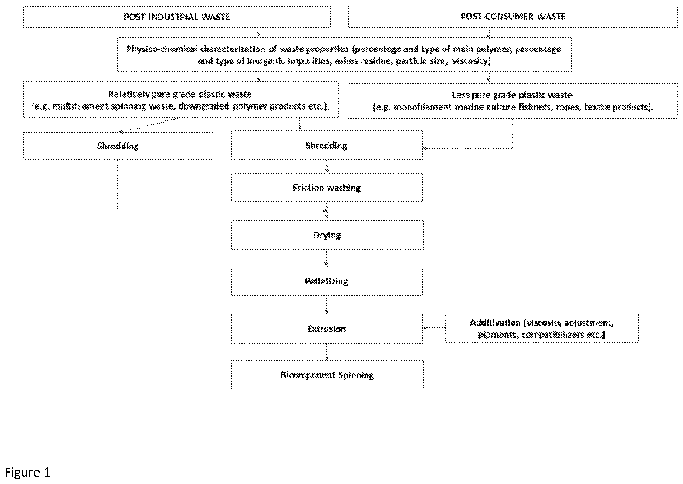

Fig. 1 presents a schematic representation of the pre-processing steps of the thermoplastic waste material to be used in the core component for standard bicomponent spinning process
Fig. 2 presents a cross section (optical microscopy, spotlight + transmitted light) of the fiber made according to the second embodiment
Fig. 3 presents a cross section (optical microscopy, spotlight + transmitted light) of the fiber made according to the third embodiment
Fig. 4 presents a cross section (optical microscopy, spotlight + transmitted light) of the fiber made according to the fifth embodiment

The invention refers to a man-made multicomponent filament of the polymer fiber with a low Global Warming Potential value, wherein said filament is comprised of at least one core component, wherein said at least one core component is comprised of a mechanically regenerated thermoplastic polymer waste material originating from post-industrial waste and/or post-consumer waste, and of at least one sheath component, wherein said at least one sheath component is comprised of a virgin or a virgin-equivalent chemically regenerated thermoplastic polymer material and surrounding said at least one core component, wherein a melt viscosity of said at least one core component differs from a melt viscosity of said at least one sheath component by up to 100% at the most, measured at a temperature and a shear rate in a die hole of a spinning pack, wherein a mass ratio of said at least one core component and said at least one sheath component is 5:95 to 95:5, preferably 50:50 and wherein the GWP value of said at least one core component is at least 30 % lower that the GWP of said at least one sheath component. Consequently, the GWP value of said at least one core component is at least 30 % lower than the GWP of presently used core components in the filament production.

Thermoplastic polymer waste material, i.e. the carrier polymer, comprised in the core component originates from post-industrial and/or post-consumer thermoplastic polymer selected from polyamide 6 (PA6) or polyamide 66 (PA66).

Virgin or a virgin-equivalent chemically regenerated thermoplastic polymer material, i.e. the carrier polymer, comprised in the sheath component is selected from polyamide 6 (PA6) or polyamide 66 (PA66).

Preferably the carrier polymer in the thermoplastic polymer waste material comprised in the core component and the carrier polymer in the virgin or the virgin-equivalent chemically regenerated thermoplastic polymer material comprised in the sheath component is of the same type, meaning that, for example, polyamide 6 originating from post-industrial waste and/or post-consumer waste is comprised in the core component, and, for example, virgin polyamide 6 or virgin-equivalent chemically regenerated polyamide 6 is comprised in the sheath component.

Other combinations are also possible, depending on the final target functionality, e.g. PA66/PA66 etc. The PA66 based composite filament is also highly advantageous from the sustainability point of view, as the PA66, due to its chemical composition, cannot be chemically recycled. In such a case, this invention offers the possibility for physical (mechanical) recycling, while avoiding the downgrading to lower processes.

Preferably the core component is comprised of polyamide 6 waste material originating from post-industrial waste and/or post-consumer waste, and the sheath component is comprised of the virgin-equivalent chemically regenerated polyamide 6 wherein a mass ratio of the core component and the sheath component is 50:50 and it is possible to carry out indefinite number of cycles of further recycling and/or regeneration of said filament of the fiber comprising said filament(s).

Preferably the filament is a bicomponent core - sheath filament, wherein the carrier polymer in the thermoplastic polymer waste material comprised in the core component and the carrier polymer in the virgin or the virgin-equivalent chemically regenerated thermoplastic polymer material is of the same type, wherein the core component is comprised of polyamide 6 waste material originating from post-industrial waste and/or post-consumer waste, and the sheath component is comprised of virgin-equivalent chemically regenerated polyamide 6 and completely surrounding the core component, and wherein the mass ratio of the core component and the sheath component is 50:50.

The waste material used in the core component originates from post-consumer waste from textile, flooring and industrial applications, i.e. post-industrial waste and/or post-consumer waste and is in various physical forms, i.e. multifilament waste, monofilament waste, fluff waste, fishnet waste, rope waste, engineering plastic waste, textile waste, free-falls waste, plastic containers waste. Said waste material can be in some cases chemically regenerated by depolymerization, however, to keep the GWP value of the waste material low, the waste material used in the core component is only mechanically recycled without any chemical depolymerization processing and is directly used in fiber spinning process. Not only the above mentioned various waste material, but the 2^{nd} choice and 3^{rd} choice thermoplastic polymer material as well, i.e. the downgraded thermoplastic polymer materials which do not need to be depolymerized due to their high level of purity, may be used as waste material in the core component and directly used in the fiber spinning process. The term "direct use in fiber spinning process" in the context of this application means that the waste material may be used directly, without previous chemical regeneration processing, i.e. the waste material is only mechanically recycled in the pre-processing steps as will be described in detail below. The determination of the processability of the said waste types in the spinning processes without the previous chemical regeneration, i.e. directly by a simple physical preparation, is based in the general know how of the fiber spinning processes, but remains linked to the fact, that it can apply only to the utilization in the multicomponent fiber spinning.

Since the core component comprises a mechanically regenerated thermoplastic polymer waste material originating from post-industrial waste and/or post-consumer waste, the GWP value of the core component is at least 30% lower than the GWP value of the sheath component and consequently at least 30% lower than the GWP value of any other standard core component used in the filament produced from the corresponding materials presently on the market. The low GWP value of the core component contributes to the low GWP value of the filament and consequently to the low GWP value of the overall fiber.

The GWP value was determined according to the standard method, described in the ISO standard ISO14044, and following the specific General program instruction set of the International EPD System, summarized in the Program Category Rules (PCR) Textile yarn and thread of natural fibers, man-made filaments or staple fibers, PCR 263&264: https://www.environdec.com/Creating-EPDs/Steps-to-create-an-EPD/Perform-LCA-study

The core component may contain at most up to 50 wt. % of solid impurities in the form of particles, particle aggregates or agglomerates and other polymer materials, calculated on the quantity of the core component. Solid impurities are fillers, e.g. clays, powder, sand, silicates, glass fibers, salts, carbonates or dirt. The maximum dimension of particles, particle aggregates or agglomerates may be at most equal to or less than 80% of a diameter of a single filament of the fiber, wherein the dimension refers to the longest dimension of each particle shape, and the average longest dimension of the particle shape should not be higher than 10% of the dimension of the single filament of the fiber.

Other polymer materials refer to other polymer species added to, or chemically linked to the carrier polymer.

Prior to decision to use the waste material in the core component in the spinning process, the type and percentage of the solid impurities in the waste material are defined by physicochemical analysis, where at least hydrolysis in HCI is done, to identify the non-hydrolysable residue, followed by FTIR spectroscopy scan to identify the present species and separately ashes residue for inorganic filler estimate.

The influence of solid impurities present in the waste material on the material filterability and processability in fiber spinning process are routinely determined by the filter pressure rise test ISO 13900-5:2005. The content of ashes residue in the core component may be up to 10 wt. % determined by analysis described in ASTM standard ASTM D5630 - 13. Preferably the content of ashes residue in the core component is from 2 to 3 wt. %. The Melt Flow Rate - MFR of the core component may be from 50% up to 200% of the MFR value of the sheath component, expressed in g/min as determined by analysis described in ASTM standard ASTM D1238 - 13. However, in practice the best results are observed when the MFR values of both components are as close as possible.

Optionally the core component may contain additives for adjusting the melt viscosity of the core component to the melt viscosity of the sheath component. Suitable additives for adjusting the melt viscosity are any commercial plasticizers, appropriate for the specific processing and application conditions, well known in the regular industrial practice, such as for example, for polyamide, PA-compatible oils or waxes, e.g. amine waxes or polyethylene glycol or other low viscosity additives with plasticizing effect on the carrier polymer, like block polyether-polyamides, block polyether-polyesters etc. Usually the amount of said additives is from 1 to 15 wt. % calculated on the quantity of the core component preferably from 1 to 5 wt. %.

Optionally, depending on the original content of pigments already present in the waste material, the core component may additionally contain organic and/or inorganic pigments that will contribute to overall color of the fiber.

Optionally the sheath component may additionally contain organic and/or inorganic pigments that provide color to the fiber and cover the presence of the core component. Suitable organic and inorganic pigments are any pigments used in the production of spun dyed fibers by conventional production processes (i.e. monocomponent spinning), and are usually integrated into an appropriate polymeric carrier, depending on the material type. Examples of suitable organic and inorganic pigments are, but not limited to, titania, carbon black, phthalocyanine C.I.Pigment Blue 15:3, perylene derivative P.R. 149 etc. Usually, the pigments are used after their incorporation into polymer carrier in a form of so called monopigments, which further are mixed with different other monopigments and additives, depending on the target tone, in a masterbatch production process. The masterbatches are then dosed in a melt spinning process, where they are diluted with the carrier polymer and further molten and mixed in extrusion into a homogenous compound. Usually, same pigments, incorporated in masterbatches by mixing of the monopigments are used in the core component and in the sheath component.

The pigment addition is usually in the range from 0.10 to 15 wt. %, calculated on the quantity of the component, depending on pigment and/or final product type. It is desired in the spinning process that the addition of pigments is as low as necessary to satisfy the color requirement of the final application. The percentage of the content of the pigment in the core component and in the sheath component can be the same, or they can be different, depending on the particular material and application in question.

### Manufacturing process

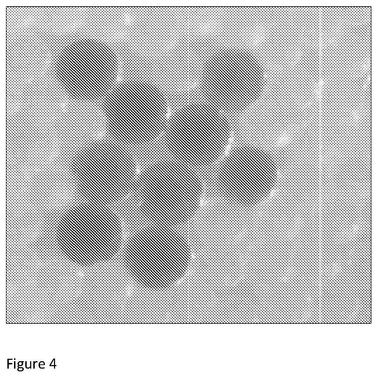

The filament of the invention, and consequently the polymer fiber comprising said filament(s), is manufactured by a multicomponent spinning technology. The core component, i.e. the thermoplastic waste material to be used in the core component, is pre-processed according to steps presented in Fig. 4. In the context of this application the terms "pre-processing of the core component" and "pre-processing of the thermoplastic waste material" are used in an equivalent way. The pre-processed core component and the sheath component are molten and conveyed separately to the spinneret orifice, from which they are spun one alongside another to form a single filament.

The pre-processing of the core component depends on the purity of the waste material to be used as the core component. The type and percentage of the impurities present in the waste material are determined by the hydrolysis in HCI, done to identify the hydrolysable vs. the non-hydrolysable residue content, followed by FTIR spectroscopy scan and/or Differential Scanning Calorimetry measurement, to identify the present species, and separately ashes residue for inorganic filler, to estimate measurement of the content of ashes residue in the core component. For the identification of the inorganic species and their particle size, Scanning Electron Microscopy coupled with The Energy Dispersive X-ray Spectroscopy is often used. Finally, after the pre-processing, the filter pressure rise test ISO 13900-5:2005 is carried out to assess the final quality of the purified waste and to define its suitability to particular multicomponent fiber product and application range. The parameters of the filter pressure rise test need to be selected on the basis of the target multicomponent filament, in order to enable direct prediction of the efficiency of the pre-processed waste material in the filament spinning. The performance observed in the filter pressure rise test is a function of the type and porosity of the filter used. Preferentially the layered filters with the sintered metal main filtration medium are used, where the nominal pore size of the filter should be less or maximum the same as the filament diameter.

The pre-processing of the core component comprises the following steps:
- physicochemical characterization of the waste material, wherein the suitability of the waste material is determined by physicochemical analysis (hydrolysis, FTIR, DSC, ashes residue, SEM-EDS
- shredding or grinding, wherein the waste material is cut into size appropriate for extrusion. Depending on the type of the waste material, the appropriate size is in the range from 5 to 50 mm, preferably from 5 to 10 mm.
- drying, wherein the shredded/ground waste material is dried to moisture content bellow 0.15 wt. %;
- pelletizing, wherein the dried shredded/grinded waste is processed into pellets in order to enable its dosage into extruder. Optionally, if the waste properties allow direct feeding into an extruder through a crammer feeder this processing stage is omitted.
- extruding, wherein at least additives for adjusting the melt viscosity of the core component to the melt viscosity of the sheath component are added.

Optionally the pre-processing of the core component includes friction washing after shredding or grinding, wherein possible impurities such as clays, powder, sand or dirt in the form of solid particles, particle aggregates or agglomerates are removed.

Optionally pigments may be added to the core component. The addition of pigments is done in the form of master batch before the extrusion step through the gravimetric dispenser, which is a standard process in the melt spinning industry.

Physicochemical characterization of the waste material, such as percentage and type of the carrier polymer, percentage and type of inorganic impurities, ashes residue, particle size, melt viscosity, are determined by physicochemical analysis as are defined above.

To have an efficient spinning process, the recycled waste material, used in the core component, should not contain any impurities, solid particles, particle aggregates or agglomerates of the size of more than 80% of the single filament diameter and the melt viscosity of the core component should match the melt viscosity range of the sheath component in the entire range of the process shear rates. The melt viscosity is determined by the capillary rheology melt viscosity measurement, carried out according to ISO 11443, and by the MFR (Melt Flow Rate) measurement, carried out according to ASTM 1238-13.

The pre-processed core component and the sheath component are molten separately and conveyed separately to the spinneret orifice from which they are spun one alongside another to form a single filament of the fiber.

A man-made filament of the polymer fiber of the invention exhibits lower Global Warming Potential value with regard to other standard filaments produced from the corresponding materials presently on the market. Consequently, the polymer fiber comprising said filament(s) exhibits lower Global Warming Potential value with regard to other standard fibers produced from the corresponding materials presently on the market. The GWP value was determined according to the standard method, described in the ISO standard ISO14044, and following the specific General program instruction set of the International EPD System, summarized in the Program Category Rules (PCR) Textile yarn and thread of natural fibers, man-made filaments or staple fibers, PCR 263&264: https://www.environdec.com/Creating-EPDs/Steps-to-create-an-EPD/Perform-LCA-study.

The use of the waste material as the core component is regulated by the dedicated EPR procedures in the mill (e.g., SAP), which allows for full traceability of all the material flows in the production. The internal procedures are validated by the Global Recycling Standard and audited regularly on a biannual level: https://certifications.controlunion.com/en/certification-programs/certification-programs/grs-global-recycle-standard.

### Examples

A man-made fiber with one or more bicomponent sheath core filament was spun on a bicomponent spinning line, which allows separate melting and extrusion of both components, i.e. the core component and the sheath component, in two different extruders. Both molten components were dosed in a predefined ratio by the means of the melt spinning pumps and conveyed to the spinnerets separately.

The sheath component was a virgin PA6 or a virgin PA66, depending on the type of the fiber. As an available alternative to a virgin PA6, a regenerated PA6 polymer was used, which, being based on a regenerated caprolactam of high purity and controlled physical properties, allowed for typical machine setting and standard processing condition as for polyamide 6.

### First embodiment

The core component was the post-industrial PA6 waste in the form of ropes. The polyamide ropes are typically used in marine, packaging, cargo handling and industrial safety applications. To enable their use in the bicomponent spinning process, ropes were processed into resin by direct feeding into inlet extruder zone of a compounding twin-screw extruder LabTech LTE20-40 and re-extruded into pellets at 260°C. The re-extruded pellets were characterized with respect to inorganic pigment content as 1% by Ashes residue (%), (analysis described in ASTM standard ASTM D5630 - 13) and MFR 33 (g/10 min) (analysis described in ASTM standard ASTM D1238 - 13) and used as the core component on a bicomponent production line. The temperature of the core component, as measured in the instance of entering the spinning pack, was 250°C. The sheath component was regenerated PA6 polymer. The individual bicomponent filament of the fiber produced contained 50% of the sheath component and 50% of the core component. The spinning of a fiber with a description 60 f 9, was carried out at the production speed of 3050 m/min. The POY spools produced were evaluated for Denier (ISO 2060), Tensile Elongation and Tenacity (ISO 2062, SIST EN 13895:2003) and Color, verified by the standard CIE L*a*b* spectrophotometric measurement (Spectrophotometer ColorQuest XE, method based on an internal standard for color determination AquafilSLO R12). They were further texturized at the DTY (Draw Textured Yarn) machine at the standard speed of 600 m/min, draw ratio W2/W1=1,32 and temperature=165°C. The texturized spools were further evaluated for Denier, Elongation and Tenacity, and knitted into control socks and their appearance was visually evaluated against standard, i.e. monocomponent fully petro-based fiber. The results are summarized in Table 2 (example 3).

### Second embodiment

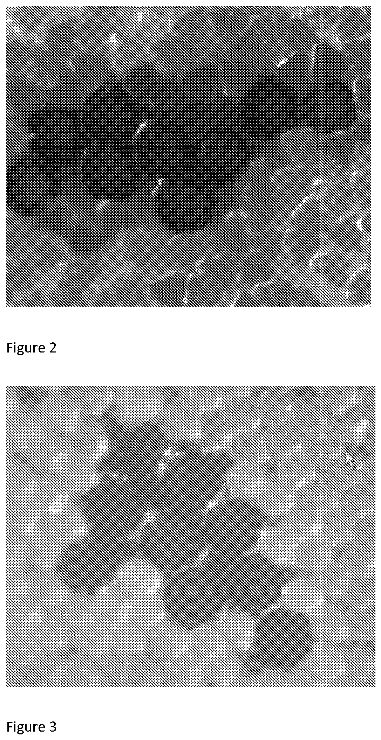

The second embodiment of the invention was carried out according to the above described procedure. The core component in this case was the post-industrial spinning waste, i.e. freefalls from the spinning process. To enable its use in spinning, the waste was ground, re-extruded and spun in bicomponent spinning line, following the above described procedure. The Ashes content was 0.7% and the MFR was 30 g/10 min. The sheath component was regenerated PA6 polymer. The results are summarized in Table 2 (example 4). The cross-section of the fiber is shown in Figure 2.

### Third embodiment

In the third embodiment, the core component was the post-consumer PA6-rich waste in the form of shredded black material, originated from the fuel tank systems and pressure vessels. The composition of such waste is app. 65% PA6, impact strength and heat-ageing stabilized through the 35% content of EPDM rubber, compatibilizers, nanoclays, etc. To enable its use in the bicomponent spinning process, the shredded pieces were processed into resin by direct feeding into inlet extruder zone of a compounding twin-screw extruder LabTech LTE20-40, followed by another re-extrusion with the addition of the 5% of a polyamide plasticizer. The original MFR value of the material was 4 g/10min, after the re-extrusion it increased to 24 g/10 min. The both re-extrusions were carried out at 260°C. The re-extruded pellets were characterized with respect to inorganic pigment content by Ashes residue (%), MFR (g/10 min) and filterability (Filter test value, FPV bar/g) and used as the core component on a bicomponent production line. The temperature of the core component, as measured in the instance of entering the spinning pack, was 262°C. The individual bicomponent filament of the fiber produced contained 50% of the sheath component and 50% of the core component. The cross-section of the fiber is shown in Figure 3. The spinning of a fiber with a description 60 f 9,, was carried out at the production speed of 3050 m/min. The sheath component was regenerated PA6, with the addition of 0.6 wt. % of carbon black. The Carbon black pigment was added in a form of 30% regenerated PA6 based color concentrate. The POY spools produced were evaluated for Denier, Tensile Elongation, Tenacity and Color, verified by the standard CIE L*a*b* spectrophotometric measurement as described in the first embodiment. They were texturized at the same parameters as described in the first embodiment. The results are summarized in Table 2.

The stringing up and the winding on the bicomponent spinning machine was efficient. There were no filament and/or fiber breaks throughout the trial, neither any other particularities were observed.

It was attempted in the course of this trial to spin the pure recycled core component, without the virgin material based sheath. This proved to be impossible for two distinctive reasons:
1. While there was no any particular monomer release noted during the bicomponent trial, the fumes liberated at the die hole exit intensified in quantity and smell as the bicomponent spinning process was replaced by monocomponent spinning process of the recycled material only. This confirmed the role of the virgin material as a protective blanket that acted as an efficient wrapper to the recycled content, forming an enclosure to avoid smell, evaporation, migration and any other non-desired phenomena related to the nature of the material enclosed in the core.
2. The individual filaments and consequently the fiber was repetitively broken between the godet rolls. This confirmed the importance of the role of the virgin material in the overall mechanical strength of the bicomponent filament/fiber. While the bicomponent filament/fiber had smooth and non-problematic behavior in spinning and processing along with fairly standard mechanical properties as monitored in the standard textile characterization, the core material could not be processed into the filament/fiber, confirming the necessity to use the bicomponent technology.

### Fourth embodiment

In the fourth embodiment, the core component was the post-industrial PA66 waste in the form of the as-spun, non-stretched filament fiber mix, originated from the industrial spinning process waste, produced during the regular spinning position cleaning and yarn breaks and collected from different production lines. The composition of such waste is app. 98.7-100 % PA66. To enable its use in the bicomponent spinning process, the filament was processed into pellets by cutting in a grinder followed by feeding into inlet extruder zone of a compounding twin-screw extruder LabTech LTE20-40. The original MFR value of the material was 46 g/10min, the re-extrusion was carried out at 260°C. The re-extruded pellets were characterized with respect to inorganic pigment content by Ashes residue (%), MFR (g/10 min) and filterability (Filter test value, FPV bar/g) and used as the core component on a bicomponent production line. The temperature of the core component, as measured in the instance of entering the spinning pack, was 280°C. The individual bicomponent filament of the fiber produced contained 67% of the sheath component and 33% of the core component. The spinning of a fiber with a description 60 f 9, was carried out at the production speed of 3050 m/min. The sheath component was a virgin PA66. The POY spools produced were evaluated for Denier, Tensile Elongation and Tenacity, as described in the first embodiment. They were texturized at the same parameters as described in the first embodiment. The results are summarized in Table 2.

The stringing up and the winding on the bicomponent spinning machine was efficient. There were no filament and/or fiber breaks throughout the trial, neither any other particularities were observed.

### Fifth embodiment

In the fifth embodiment, the core component used was the post-industrial fabric waste composed of PA66 fiber. This kind of fabric is a technical, non-coated fabric, used in the automotive industry for the production of driver front airbag and passenger airbag. The fabrics are produced from a special grade, high tenacity PA66 fibers with high deniers (300-500) den, decitex-per-filament value in the range 4-7 dpf and a tenacity of 6 cN/dtex. The composition of the waste fabric was roughly 99.9% Polyamide 66 and less than 0.1% inorganic residue. The waste was a non-conforming fabric roll ready to be used for a non-coated air bag manufacturing, but downgraded to waste due to fabric aspect deviations from the quality specification. To enable its use in the bicomponent spinning process, the fabric was ground in a Tria grinder into fabric fluff, and directly fed into the crammer feeder unit which conveyed the waste into the inlet extruder zone of a compounding twin-screw extruder Comac ICMA51 model MC51V. The re-extrusion was carried out at heating zone temperature profile of 270°C - 285°C. The re-extruded pellets were characterized with respect to MFR (g/10 min), Relative Viscosity (RV, non-dimensional) and filterability (Filter test value, FPV bar/g) and used as the core component on a bicomponent production line. The temperature of the core component, as measured in the instance of entering the spinning pack, was 286°C. The individual bicomponent filament of the fiber produced contained 67% of the sheath component and 33% of the core component. The spinning of a fiber with a description 60 f 9,, was carried out at the production speed of 3050 m/min. The sheath component was a virgin PA66. The POY spools produced were evaluated for Denier, Tensile Elongation and Tenacity, as described in the first embodiment. They were texturized at the same parameters as described in the first embodiment. The results are summarized in Table 2. The cross-section of the fiber is shown in Figure 4.

The stringing up and the winding on the bicomponent spinning machine was efficient. There were no filament and/or fiber breaks throughout the trial, neither any other particularities were observed.

In table 1 standard GWP value (kg CO₂eq/kg) of standard polymeric fibers presently on the market are presented**,** including materials not forming part of the invention - rounded values along with the corresponding GER -PED* values.

**Table 2: Summary of the main properties of the Low GWP FT fiber of the invention vs. benchmarking products (extract)**

| Polymeric fiber type | Approximate value range of the GWP (kg CO2/ kg fiber) - standard fiber on market | Approximate value range of the GER - PED (MJ / kg fiber) - standard fiber on market) |
|---|---|---|
| PA6 | 8,1⁽¹⁾ ; 12,5⁽²⁾ | 194,61 ⁽¹⁾ ; 178,16 ⁽²⁾ |
| Chemically regenerated PA6 | 2,1⁽³⁾ | 94,79 ⁽³⁾ |
| Mechanically recycled PA6 | 2,45⁽⁴⁾ ; 0,6 ⁽⁸⁾ | 167,352⁽⁴⁾; 71,5⁽⁸⁾ |
| PA66 | 7,59⁽⁵⁾; 10,4⁽⁶⁾ | 180,17 ⁽⁵⁾; 196⁽⁶⁾ |
| PET | 4,1⁽⁷⁾ | 110⁽⁷⁾ |

| | | |
|---|---|---|
| * The Global energy requirement - Primary energy demand (GER-PED) as a measure of the total amount of primary energy extracted from the earth is an indicator of overall energy demand of the product. | | |

In Table 2, the monocomponent fiber of example 1 and 2, was produced by the standard bicomponent spinning process, where same type of material (PA 6 in Example 1 and regenerated PA6 in Example 2) was extruded and spun into both the core and the sheath section. This experiment was designed and carried out on the same bicomponent fiber production line in order to enable a direct comparison of the physical characteristics of fibers along with the energy impact evaluation against the fibers produced with the recycled core components, as described in Examples 3-7.

| Trial No. | 1 | 2 | 3 | 4 | 5 | 6 | 7 |
|---|---|---|---|---|---|---|---|
| Sample Type | Bicomponent fiber from petro-based CPL | Bicomponent fiber, regenerated CPL | Bicomponent fiber with recycled waste core | Bicomponent fiber with recycled waste core | Bicomponent fiber with recycled waste core | Bicomponent fiber with recycled waste core | Bicomponent fiber with recycled waste core |
| Sheath component | PA 6 | chemically regenerated PA6 | chemically regenerated PA6 | chemically regenerated PA6 | chemically regenerated PA6 with 0.6% of Carbon Black | PA66 | PA66 |
| Core component | PA 6 | chemically regenerated PA6 | recycled* PA 6 ropes** | recycled* PA 6 freefalls*** | recycled* PA 6 from fuel tanks**** | recycled* PA 66 spinning waste | recycled* PA 66 air bag waste |
| Fiber cross section | round | round | round core sheath | round core sheath | round core sheath | round core sheath | round core sheath |
| Percentage of Sheath (%) | 50 | 50 | 50 | 50 | 50 | 67 | 67 |
| Denier (dtex) | 55 | 55 | 55 | 55 | 55 | 52 | 52 |
| Number of filaments | 10 | 9 | 9 | 9 | 9 | 9 | 9 |
| Percentage of Core (%) | 50 | 50 | 50 | 50 | 50 | 33 | 33 |
| Elongation (%) | 63 | - | 69 | 70 | 63 | 42 | 40 |
| Tenacity (cN/dtex) | 3.3 | - | 3.6 | 3.5 | 3.3 | 3.7 | 4.2 |
| Visual aspect of the Sock | OK | OK | OK | OK | OK | OK | OK |
| GWP *(kgCO₂eq*/*kg* ) *- rounded values* | 8,1⁽¹⁾ | 2,1⁽³⁾ | 1,3⁽⁸⁾ | 1,3⁽⁸⁾ | 1,3⁽⁸⁾ | 4,8⁽⁹⁾ | 4,8⁽⁹⁾ |
| GER-PED (MJ/kg)-rounded values | 195 | 95 | 66 | 66 | 66 | 102 | 102 |

| | | | | | | | |
|---|---|---|---|---|---|---|---|
| *recycling refers to a physical recycling process consisted of shredding/grinding; drying; pelletizing, extruding ** produced on rope twisting machine from FDY winding waste on spools (Snovtex). *** freefalls refer to spinning waste ****post-industrial Durethan BC550Z 900116 DUSXBL, improved impact strength material, PA 6 based. (1) Life Cycle Assessment of ECONYL ^{®} and virgin PA6 polymer NTF ECONYL ^{®} yarn for EPD certification, REV.1, 02.08.2019 - average value of two product types (2) ENVIRONMENTAL PRODUCT DECLARATION FOR NUREL, S.A. NYLON 6 YARNS, revision date 2016-12-16 (3) ENVIRONMENTAL PRODUCT DECLARATION for ECONYL^{®} NYLON TEXTILE FILAMENT YARNS, revision 5, 15. August 2019 - average value of two product types (4) ENVIRONMENTAL PRODUCT DECLARATION FOR RECO NYLON YARN BY NUREL, S.A., publication date 2019-02 -08 (5) ENVIRONMENTAL PRODUCT DECLARATION RADIFLOOR (PA6 and PA6,6) Bulk Continuous Filament (BCF) and Refined Yarns in Raw White and Solution-Dyed Variants, revision date 2019-04-30 (rev.4) - product BCF PA 66 (3C) (6) PE International database 38 pack - EU28 Polyamide 6.6 fibres (PA 6.6) - agg (7) PE International database 38 pack - EU28 Polyethylene terephthalate fibres (PET) - agg (8) Internal LCA calculations - based on LCA studies and AquafilSLO and AquafilCRO 2018 inventory data and (3) (9) Values for virgin PA66 polymer: PE International database 38 pack: Polyamide 6.6 Granulate (PA 6.6) (HMDA over AN)-agg | | | | | | | |

## Claims

1. A manufacturing process for manufacturing a filament of a polymer fiber, wherein the filament is a bicomponent core - sheath filament, wherein the core component is comprised of polyamide 6 or polyamide 66 waste material originating from post-industrial waste and/or post-consumer waste, and the sheath component is comprised of virgin-equivalent chemically regenerated polyamide 6 or polyamide 66 and completely surrounding the core component, wherein the process comprises the following steps:
- pre-processing of the core component, wherein pre-processing comprises the following steps:
- physicochemical characterization of the waste material, wherein the suitability of the waste material is determined by physicochemical analysis by defining a percentage and type of the carrier polymer, a percentage and type of inorganic impurities, ashes residue, particle size and melt viscosity;
- shredding or grinding, wherein the waste material is cut into size in the range from 5 to 50 mm, preferably from 5 to 10 mm;
- drying, wherein the shredded or ground waste material is dried to moisture content bellow 0.15 wt. %;
- pelletizing;
- extruding, to obtain the pre-processed core component which contains up to 50 wt. % of solid impurities calculated on the quantity of the core component in the form of particles, particle aggregates or agglomerates, wherein a dimension of particles, particle aggregates or agglomerates is at most equal to or less than 80% of a diameter of the filament, and the dimension of the particles, particle aggregates or agglomerates is determined by methods as described in the description, wherein
the dimension refers to the longest dimension of each particle shape, a content of ashes residue in the core component is up to 10 wt. %, preferably from 2 to 3 wt. %, determined by analysis described in ASTM standard ASTM D5630 - 13 and a Melt Flow Rate of the core component is from 50% up to 200% of the Melt Flow Rate value of the sheath component, expressed in g/min as determined by analysis described in ASTM standard ASTM D1238 - 13, and wherein at least additives for adjusting the melt viscosity of the core component to the melt viscosity of the sheath component are added, wherein the melt viscosity is determined by capillary rheology according to ISO 11443;
- the pre-processed core component and the sheath component are molten separately and conveyed separately to the spinneret orifice from which they are spun one alongside another to form a single filament with a low Global Warming Potential value, wherein the GWP value of the core component is at least 30 % lower that the GWP of the sheath component, wherein the GWP value is defined by the ISO standard ISO14044.

2. The manufacturing process according to claim 1, wherein the pre-processing of the core component includes friction washing after shredding or grinding, wherein possible impurities such as clays, powder, sand or dirt in the form of solid particles, particle aggregates or agglomerates are removed.

3. The manufacturing process according to claims 1 or 2, wherein a mass ratio of the core component and the sheath component is 5:95 to 95:5, preferably 50:50.

4. The manufacturing process according to any of claims 1 to 3, wherein the sheath component additionally contains a mixture of organic and inorganic pigments for providing color to the filament and for covering the presence of the core component.

5. A filament of a polymer fiber with a low Global Warming Potential value produced by a manufacturing process according to claims 1 to 4, wherein the filament is a bicomponent core - sheath filament, wherein the core component is comprised of polyamide 6 or polyamide 66 waste material originating from post-industrial waste and/or post-consumer waste, and the sheath component is comprised of virgin-equivalent chemically regenerated polyamide 6 or polyamide 66 and completely surrounding the core component, wherein a melt viscosity of the core component differs from a melt viscosity of the sheath component by up to 100% at the most, measured at a temperature and a shear rate in a die hole of a spinning pack, wherein a mass ratio of the core component and the sheath component is 5:95 to 95:5, preferably 50:50, and wherein the GWP value of the core component is at least 30% lower that the GWP of the sheath component, wherein the GWP value is defined by the ISO standard ISO14044.

6. The filament according to claim 5, wherein the core component contains up to 50 wt. % of solid impurities calculated on the quantity of the core component in the form of particles, particle aggregates or agglomerates, wherein a dimension of particles, particle aggregates or agglomerates is at most equal to or less than 80% of a diameter of the filament, wherein the dimension refers to the longest dimension of each particle shape.

7. The filament according to claims 5 or 6, wherein the content of ashes residue in the core component is up to 10 wt. %, preferably from 2 to 3 wt. %, determined by analysis described in ASTM standard ASTM D5630 - 13.

8. The filament according to any of claims 5 to 7, wherein the Melt Flow Rate of the core component is from 50% up to 200% of the Melt Flow Rate value of the sheath component, expressed in g/min as determined by analysis described in ASTM standard ASTM D1238 - 13.

9. The filament according to any of claims 5 to 8, wherein the core component is comprised of polyamide 6 waste material originating from post-industrial waste and/or post-consumer waste, and the sheath component is comprised of virgin-equivalent chemically regenerated polyamide 6 and completely surrounding the core component, and wherein the mass ratio of the core component and the sheath component is 50:50.

10. A polymer fiber comprising at least one of the filaments according to claims 5 to 8 and produced by a process according to claims 1 to 4.

11. A woven or a knitted fabric comprising a polymer fiber according to claim 9 at least in a portion of the woven or knitted fabric.

## Patentansprüche

1. Herstellungsverfahren zur Herstellung eines Filaments einer Polymerfaser, wobei das Filament ein Bi-Komponenten-Kern-Mantel-Filament ist, wobei die Kernkomponente aus Polyamid 6- oder Polyamid-66-Abfallmaterial besteht, das von Post-Industrial-Abfällen und/oder Post-Consumer-Abfällen stammt, und die Mantelkomponente aus virgin-äquivalentem chemisch regeneriertem Polyamid 6 oder Polyamid 66 besteht und die Kernkomponente vollständig umgibt, wobei das Verfahren die folgenden Schritte umfasst:
- Vorverarbeitung der Kernkomponente, wobei die Vorverarbeitung die folgenden Schritte umfasst:
- physikochemische Charakterisierung des Abfallmaterials, wobei die Eignung des Abfallmaterials durch physikochemische Analyse bestimmt wird indem ein Prozentsatz und der Typ des Trägerpolymers, ein Prozentsatz und der Typ von anorganischen Verunreinigungen, ein Aschenrückstand, eine Partikelgröße und eine Schmelzviskosität definiert werden;
- Zerkleinerung oder Mahlung, wobei das Abfallmaterial auf eine Größe im Bereich von 5 bis 50 mm, vorzugsweise von 5 bis 10 mm, geschnitten wird;
- Trocknung, wobei das zerkleinerte oder gemahlene Abfallmaterial zu einem Feuchtigkeitsgehalt von 0,15 Gew.-% getrocknet wird;
- Pelletierung;
- Extrudieren, um die vorverarbeitete Kernkomponente zu erhalten, die bis zu 50 Gew.-% an festen Verunreinigungen enthält, berechnet auf der Menge der Kernkomponente in Form von Partikeln, Partikelaggregaten oder Agglomeraten, wobei die Größe der Partikel, Partikelaggregate oder Agglomerate höchstens gleich oder kleiner als 80 % eines Durchmessers des Filaments ist und die Größe der Partikel, Partikelaggregate oder Agglomerate durch Verfahren, wie in der Beschreibung beschrieben, bestimmt werden, wobei sich die Größe auf die längste Größe jeder Partikelform bezieht, der Gehalt an Aschenrückständen in der Kernkomponente bis zu 10 Gew.-%, vorzugsweise 2 bis 3 Gew.-%, bestimmt durch in ASTM-Norm D5630-13 beschriebene Analyse, beträgt und die Schmelzflussrate der Kernkomponente von 50 % bis zu 200 % des Schmelzflussratenwerts der Mantelkomponente beträgt, ausgedrückt in g/min, bestimmt durch in ASTM-Norm ASTM D1238-13 beschriebene Analyse, und wobei zumindest Additive zur Einstellung der Schmelzviskosität der Kernkomponente auf die Schmelzviskosität der Mantelkomponente zugegeben werden, wobei die Schmelzviskosität durch Kapillarrheologie gemäß ISO 11443 bestimmt wird;
- die vorverarbeitete Kernkomponente und die Mantelkomponente werden separat aufgeschmolzen und separat zur Spinndüsenöffnung befördert, aus der sie zu einem einzigen Filament mit einem niedrigen globalen Erwärmungspotentialwert nebeneinander versponnen werden, wobei der GWP-Wert der Kernkomponente mindestens 30 % niedriger ist als der GWP der Mantelkomponente, wobei der GWP-Wert durch die ISO-Norm ISO14044 definiert ist.

2. Herstellungsverfahren nach Anspruch 1, **dadurch gekennzeichnet, dass** die Vorverarbeitung der Kernkomponente nach Zerkleinerung oder Mahlung Reibungswaschen umfasst, wobei mögliche Verunreinigungen wie Tone, Pulver, Sand oder Schmutz in Form von Feststoffpartikeln, Partikelaggregaten oder Agglomeraten entfernt werden.

3. Herstellungsverfahren nach Anspruch 1 oder 2, wobei das Massenverhältnis der Kernkomponente und der Mantelkomponente 5 : 95 bis 95: 5, vorzugsweise 50: 50 beträgt.

4. Herstellungsverfahren nach einem der Ansprüche 1 bis 3, wobei die Mantelkomponente zusätzlich eine Mischung aus organischen und anorganischen Pigmenten zur Bereitstellung von Farbe für das Filament und zur Abdeckung des Vorhandenseins der Kernkomponente enthält.

5. Filament einer Polymerfaser mit einem niedrigen globalen Erwärmungspotentialwert, hergestellt durch das Herstellungsverfahren nach den Ansprüchen 1 bis 4, wobei das Filament ein Bi-Komponenten-Kern-Mantel-Filament ist, wobei die Kernkomponente aus Polyamid 6- oder Polyamid-66-Abfallmaterial besteht, das von Post-Industrial-Abfällen und/oder Post-Consumer-Abfällen stammt, und die Mantelkomponente aus virgin-äquivalentem chemisch regeneriertem Polyamid 6 oder Polyamid 66 besteht und die Kernkomponente vollständig umgibt, wobei sich die Schmelzviskosität der Kernkomponente von der Schmelzviskosität der Mantelkomponente um bis zu höchstens 100 % unterscheidet, gemessen bei einer Temperatur und einer Scherrate in einem Matrizenloch einer Spinnpackung, wobei das Massenverhältnis der Kernkomponente und der Mantelkomponente 5: 95 bis 95: 5, vorzugsweise 50: 50, beträgt, und wobei der GWP-Wert der Kernkomponente mindestens 30 % niedriger ist als der GWP der Mantelkomponente, wobei der GWP-Wert durch die ISO-Norm ISO14044 definiert ist.

6. Filament nach Anspruch 5, wobei die Kernkomponente bis zu 50 Gew.-% an festen Verunreinigungen enthält, berechnet auf der Menge der Kernkomponente in Form von Partikeln, Partikelaggregaten oder Agglomeraten, wobei die Größe der Partikel, Partikelaggregate oder Agglomerate höchstens gleich oder kleiner als 80 % eines Durchmessers des Filaments ist, wobei sich die Größe auf die längste Größe jeder Partikelform bezieht.

7. Filament nach Anspruch 5 oder 6, wobei der Gehalt an Aschenrückständen in der Kernkomponente bis zu 10 Gew.-%, vorzugsweise 2 bis 3 Gew.-%, bestimmt durch die in ASTM-Norm ASTM D5630-13 beschriebene Analyse, beträgt.

8. Filament nach einem der Ansprüche 5 bis 7, wobei die Schmelzflussrate der Kernkomponente von 50 % bis zu 200 % des Schmelzflussratenwerts der Mantelkomponente beträgt, ausgedrückt in g/min, bestimmt durch in ASTM-Norm ASTM D1238-13 beschriebene Analyse.

9. Filament nach einem der Ansprüche 5 bis 8, wobei die Kernkomponente aus Polyamid 6-Abfallmaterial besteht, das von Post-Industrial-Abfällen und/oder Post-Consumer-Abfällen stammt, und die Mantelkomponente aus virgin-äquivalentem chemisch regeneriertem Polyamid 6 besteht und die Kernkomponente vollständig umgibt, und wobei das Massenverhältnis der Kernkomponente und der Mantelkomponente 50: 50 beträgt.

10. Polymerfaser, umfassend mindestens eines der Filamente nach den Ansprüchen 5 bis 8 und hergestellt nach dem Verfahren gemäß den Ansprüchen 1 bis 4.

11. Gewebe oder Gewirke, umfassend eine Polymerfaser nach Anspruch 9 zumindest in einem Abschnitt des Gewebes oder Gewirkes.

## Revendications

1. Procédé de fabrication pour la fabrication d'un filament d'une fibre polymère, le filament étant un filament à deux composants âme-gaine, le composant âme étant constitué de déchets de polyamide 6 ou de polyamide 66 provenant de déchets post-industriels et/ou de déchets post-consommation, et le composant gaine étant constitué de polyamide 6 ou de polyamide 66 régénéré chimiquement équivalent vierge et entourant complètement le composant âme, le procédé comprenant les étapes suivantes :
- le prétraitement du composant âme, dans lequel le prétraitement comprend les étapes suivantes :
- la caractérisation physico-chimique des déchets, l'adéquation des déchets étant déterminée par l'analyse physico-chimique en définissant un pourcentage et un type du polymère support, un pourcentage et un type d'impuretés inorganiques, des résidus de cendres, une taille de particule et une viscosité à l'état fondu ;
- le déchiquetage ou broyage, dans lequel les déchets sont découpés en taille s'étandant de 5 à 50 mm, de préférence de 5 à 10 mm ;
- le séchage, dans lequel les déchets déchiquetés ou broyés sont séchés jusqu'à l'obtention d'une teneur en humidité inférieure à 0,15 % en poids ;
- la pelletisation ;
- l'extrusion pour obtenir le composant âme prétraité qui contient jusqu'à 50 % en poids d'impuretés solides calculées sur la quantité du composant âme sous la forme de particules, d'agrégats de particules ou d'agglomérats, une dimension de particules, d'agrégats de particules ou d'agglomérats étant au plus égale ou inférieure à 80 % d'un diamètre du filament et la dimension des particules, des agrégats de particules ou des agglomérats étant déterminés par des procédés tels que décrits dans la description, la dimension se rapportant à la dimension la plus longue de chaque forme de particule, une teneur en résidus de cendres dans le composant âme allant jusqu'à 10 % en poids, de préférence de 2 à 3 % en poids, déterminée par l'analyse décrite dans la norme ASTM D5630 - 13 et un indice de fluidité à chaud du composant âme étant de 50 % jusqu'à 200 % de la valeur de l'indice de fluidité à chaud du composant gaine, exprimée en g/min telle que déterminée par l'analyse décrite dans la norme ASTM D1238 - 13, et au moins des additifs pour ajuster la viscosité à l'état fondu du composant âme à la viscosité à l'état fondu du composant gaine étant ajoutés, la viscosité à l'état fondu étant déterminée par rhéologie capillaire selon la norme ISO 11443 ;
- le composant âme et le composant gaine prétraités sont fondus séparément et transportés séparément vers l'orifice de filière à partir duquel ils sont filés l'un à côté de l'autre pour former une fibre unique ayant une faible valeur de potentiel de réchauffement global (PRG), la valeur de PRG du composant âme étant d'au moins 30 % inférieure à la PRG du composant gaine, la valeur de PRG étant définie par la norme ISO14044.

2. Procédé de fabrication selon la revendication 1, dans lequel le prétraitement du composant âme comprend un lavage par friction après le déchiquetage ou le broyage, dans lequel des impuretés possibles telles que des argiles, de la poudre, du sable ou de la saleté sous forme de particules solides, d'agrégats de particules ou d'agglomérats sont éliminées.

3. Procédé de fabrication selon les revendications 1 ou 2, dans lequel un rapport massique du composant âme et du composant gaine est de 5 : 95 à 95 : 5, de préférence 50 : 50.

4. Procédé de fabrication selon l'une quelconque des revendications 1 à 3, dans lequel le composant gaine contient en outre un mélange de pigments organiques et inorganiques pour fournir une couleur au filament et pour couvrir la présence du composant âme.

5. Filament d'une fibre polymère ayant une faible valeur de potentiel de réchauffement global produit par un procédé de fabrication selon les revendications 1 à 4, le filament étant un filament à deux composants âme-gaine, le composant âme étant constitué de déchets de polyamide 6 ou de polyamide 66 provenant de déchets post-industriels et/ou de déchets post-consommation, et le composant gaine étant constitué de polyamide 6 ou de polyamide 66 régénéré chimiquement équivalent vierge et entourant complètement le composant âme, une viscosité à l'état fondu du composant âme différant d'une viscosité à l'état fondu du composant gaine de jusqu'à 100 % au maximum, mesurée à une température et à un taux de cisaillement dans un trou de filière d'un bloc de filage, un rapport massique du composant âme et du composant gaine étant de 5 : 95 à 95 : 5, de préférence de 50 : 50, et la valeur de PRG du composant âme étant d'au moins 30 % inférieure à la PRG du composant gaine, la valeur de PRG étant définie par la norme ISO14044.

6. Filament selon la revendication 5, dans lequel le composant âme contient jusqu'à 50 % en poids d'impuretés solides calculées sur la quantité du composant âme sous forme de particules, d'agrégats de particules ou d'agglomérats, une dimension de particules, d'agrégats de particules ou d'agglomérats étant au plus égale ou inférieure à 80 % d'un diamètre du filament, la dimension se rapportant à la dimension la plus longue de chaque forme de particule.

7. Filament selon les revendications 5 ou 6, dans lequel la teneur en résidus de cendres dans le composant âme s'élève jusqu'à 10 % en poids, de préférence de 2 à 3 % en poids, déterminée par l'analyse décrite dans la norme ASTM D5630 - 13.

8. Filament selon l'une quelconque des revendications 5 à 7, dans lequel l'indice de fluidité à chaud du composant âme est de 50 % jusqu'à 200 % de la valeur de l'indice de fluidité à chaud du composant gaine, exprimée en g/min telle que déterminée par l'analyse décrite dans la norme ASTM D1238 - 13.

9. Filament selon l'une quelconque des revendications 5 à 8, le composant âme étant constitué de déchets de polyamide 6 provenant de déchets post-industriels et/ou de déchets post-consommation, et le composant gaine étant constitué de polyamide 6 régénéré chimiquement équivalent vierge et entourant complètement le composant âme, et dans lequel le rapport massique du composant âme et du composant gaine est de 50 : 50.

10. Fibre polymère comprenant au moins l'un des filaments selon les revendications 5 à 8 et produite par le procédé selon les revendications 1 à 4.

11. Tissu tissé ou tricoté comprenant une fibre polymère selon la revendication 9 au moins dans une partie du tissu tissé ou tricoté.
